# EUROPÄISCHE PATENTSCHRIFT

(11) **EP 0 861 135 B1**
(45) Veröffentlichungstag und Bekanntmachung des Hinweises auf die Patenterteilung: **05.06.2002**
(21) Anmeldenummer: 97918945.3
(22) Anmeldetag: 29.07.1997
(51) Int. Cl.: B23F 23/00

(54) **WERKZEUGMASCHINE ZUR BEARBEITUNG UMLAUFENDER WERKSTÜCKE MITTELS EINES SYNCHRON ZUM WERKSTÜCK ANGETRIEBENEN WERKZEUGS**
MACHINE TOOL FOR THE PROCESSING OF ROTATING TOOLS BY MEANS OF A TOOL DRIVEN IN SYNCHRONIZATION WITH A WORK PIECE
MACHINE-OUTIL POUR USINER DES PIECES TOURNANTES A L'AIDE D'UN OUTIL ACTIONNE DE MANIERE SYNCHRONE PAR RAPPORT A LA PIECE

(30) Priorität: 06.08.1996 DE 19631673
(43) Veröffentlichungstag der Anmeldung: 02.09.1998
(73) Patentinhaber: WERA WERK HERMANN WERNER GmbH & Co. KG, 42349 Wuppertal (DE)
(72) Erfinder: GARSCHAGEN, Friedrich, Albert, D-42855 Remscheid (DE); HEYM, Hans-Udo, D-42327 Wuppertal (DE)
(74) Vertreter: Grundmann, Dirk, Dr.
(86) Internationale Anmeldenummer: EP9704107
(87) Internationale Veröffentlichungsnummer: WO9805461

(56) Entgegenhaltungen:
- DE-A- 4 114 341
- US-A- 4 708 544

## Beschreibung

Die Erfindung betrifft eine Werkzeugmaschine zur Bearbeitung umlaufender Werkstücke mittels eines synchron zum Werkstück drehangetriebenen Werkzeugs, insbesondere Schlagmesser, zum Einbringen einer Verzahnung, wobei Werkstückantrieb und Werkzeugantrieb über jeweils zugeordnete Drehgeber mittels elektronischer steuernittel im Synchronlauf gehalten werden, mit einem einem der beiden Antriebe zugeordneten Stellmotor zur Beeinflussung der Phasenlage der beiden Antriebe.

Bei einer derartigen bekannten Ausgestaltung (DE-A 41 14 341) ist das Statorgehäuse mindestens des einen Motors konzentrisch zur Rotorachse gelagert und mittels des Stellmotors um diese Achse drehverstellbar. Das bedeutet, daß der Stellmotor kräftemäßig aktiv in den Kraftfluß des Antriebes eingreift und dementsprechend genügend stark dimensioniert sein muß.

Dem Gegenstand der Erfindung liegt die Aufgabe zugrunde, eine Werkzeugmaschine der in Rede stehenden Art in herstellungstechnisch einfacher Weise so auszugestalten, daß die Phasenverschiebung mit geringem Kraftaufwand erreichbar ist.

Gelöst wird diese Aufgabe in Verbindung mit den Oberbegriffsmerkmalen erfindungsgemäß durch die im Kennzeichen des Anspruchs 1 angegebenen Merkmale, wobei darauf abgestellt ist, daß ein Sensorelement eines der beiden Drehgeber drehverstellbar zum Stator des zugehörigen Antriebsmotors ist.

Die Unteransprüche betreffen vorteilhafte Weiterbildungen der erfinderischen Lösung.

Zufolge derartiger Ausgestaltung ist eine erfindungsgemäße Werkzeugmaschine angegeben, bei welcher eine vorwärts- oder rückwärtsgerichtete Änderung der Phasenlage der beiden im Synchronlauf befindlichen Antriebe mit geringerem Kraftaufwand ermöglicht ist. Es ist nicht mehr das Statorgehäuse zwecks Erzielung der Phasenveränderung drehzuverstellen, sondern ausschließlich der zugehörige Drehgeber. Daher kann der Stellmotor kräftemäßig gering ausgelegt werden. In der Praxis sieht dies so aus, daß zur Phasenänderung beispielsweise zwecks Erzielung einer Schrägverzahnung das Sensorelement des zum Antriebsmotor zugehörigen Drehgeber je nach Anstiegswinkel der Verzahnung drehverstellt wird. Die beiden Antriebsmotoren zugeordnete Synchrcnsteuerung bewirkt dabei eine Nachsynchronisation unter Herstellen des phasenverschobenen Synchronlaufes der Antriebe. Es ist möglich, das drehzuverstellende Sensorelement dem Antriebsmotor für die Werkzeugspindel zuzuordnen. Alternativ kann jedoch auch das Sensorelement des Drehgebers drehverstellbar zum Stator des Werkzeugspindel-Antriebsmotors ausgebildet sein. Eine konstruktiv günstige Umsetzung des Erfindungsgedankens zeichnet sich dabei durch die vom Antriebsmotor getrennt auf der Antriebswelle drehfest angeordnete Signalscheibe und den von der Welle frei drehbar durchgriffenen, vom Stellmotor drehverlagerbaren Ringträger aus. Letzterer ist Träger des verstellbaren Sensorelements. Zwecks Änderung der Phasenlage im Synchronlauf von Werkzeugantrieb und Werkstückantrieb bewirkt der Stellmotor eine Drehverlagerung des Ringträgers. Einhergehend wird mittels der bei solchen Werkzeugmaschinen vorgesehenen elektronischen Steuerung der Synchronlauf der über eine elektrische Welle angetriebenen Antriebsmotoren nachreguliert. Es lassen sich mittels der erfindungsgemäßen Ausgestaltung Schrägverzahnungen herstellen mit einem Winkel von maximal plus/minus 45°. Seinerseits ist der Ringträger ebenfalls mit einer Signalscheibe ausgestattet, welche von dem gehäusefesten Sensor abgefragt ist. Mittels diesem ist der Phasenwinkel von einer CNC-Steuerung erfaßbar, so daß von dieser her aus der entsprechende Befehl beispielsweise zur Erzeugung einer Schrägverzahnung eingebbar ist. Erfolgt keine Drehverstellung des Ringträgers mit daran sitzendem Sensorelement, werden Geradverzahnungen am Werkstück erzeugt. Über eine entsprechende Steuerung hinsichtlich der Drehverstellung des betreffenden Sensors könnten auch nicht lineare Schrägverzahnungen hergestellt werden.

Nachstehend wird ein Ausführungsbeispiel der Erfindung anhand der Zeichnungen erläutert. Es zeigt:

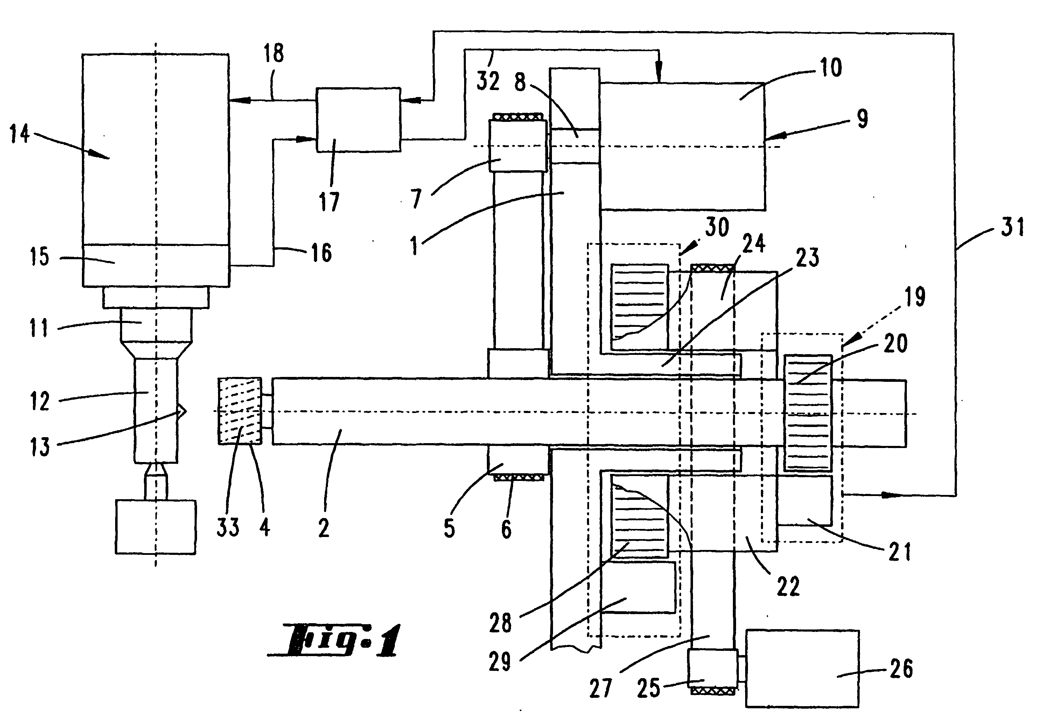

- Fig. 1: eine schematische Darstellung einer Werkzeugmaschine im Bereich der beiden Antriebe für die Werkzeugspindel und Werkstückspindel und

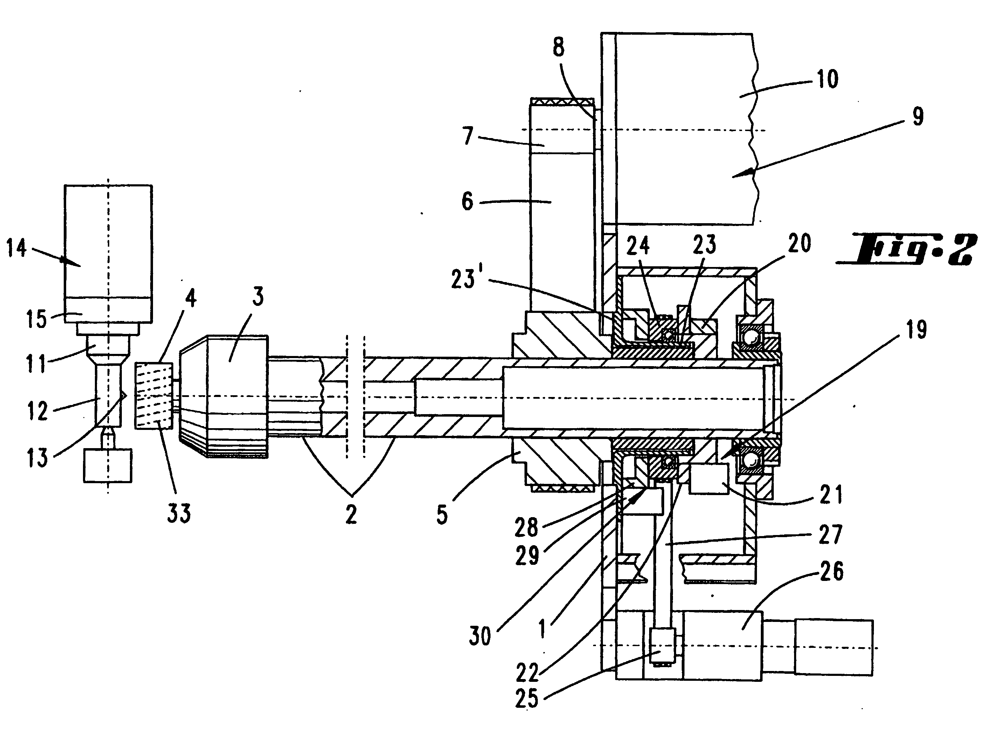

- Fig. 2: ebenfalls vereinfacht dargestellt die Werkzeugmaschine mit horizontal ausgerichteter Werkstückspindel mit kreuzend zu dieser verlaufender Werkzeugspindel.

Bezüglich der dargestellten Werkzeugmaschine handelt es sich um eine Schlagmesserfräsmaschine. Letztere besitzt eine horizontal am Maschinengestell 1 gelagerte Werkstückspindel 2. Das eine Ende derselben trägt ein Spannfutter 3 für ein zu verzahnendes Werkrad 4.

Auf der Werkstückspindel 2 ist undrehbar eine verzahnte Riemenscheibe 5 festgelegt. Ein um diese herumgeführter, verzahnter Flachriemen 6 umgreift eine Antriebsscheibe 7, welche auf der Antriebswelle 8 eines als Asynchronmotor gestalteten Antriebes 9 festgelegt ist. Dessen den nicht veranschaulichten Rotor umgebender Stator 10 ist am Maschinengestell 1 befestigt.

Kreuzend zur Werkstückspindel 2 erstreckt sich eine Werkzeugspindel 11, die ihrerseits eine Fräserwelle 12 mit einem radial ausladenden, als Schlagmesser gestalteten Werkzeug 13 trägt. In Drehung versetzt wird die Fräserwelle 12 von einem ihr zugeordneten, ebenfalls als Asynchronmotor gestalteten Antrieb 14. Beide Antriebe 9 und 14 sind mittels elektronischer Steuermittel im Synchronlauf zueinander gehalten. Hierzu besitzt der Antrieb 14 einen schematisch angedeuteten ersten Drehgeber 15. Dieser registriert die Drehzahl des Antriebes 14 und teilt die ermittelte Drehzahl über eine Leitung 16 einer Synchronsteuerungseinrichtung 17 mit. Ferner führt eine Leitungsverbindung 18 von dieser Synchronsteuerungseinrichtung 17 zum Antrieb 14.

Dem Antrieb 9 ist der zweite Drehgeber 19 zugeordnet. Dieser ist jedoch nicht dem Antrieb 9 einverleibt, sondern im Bereich der Werkstückspindel 2 vorgesehen. Im einzelnen beinhaltet dieser zweite Drehgeber 19 eine getrennt vom Antriebsmotor 9 auf der Antriebswelle der Werkstückspindel 2 drehfest angeordnete Signalscheibe 20 mit dieser zugeordnetem Sensorelement 21. Letzteres sitzt auf einem frei von der Werkstückspindel 2 durchgriffenen Ringträger 22. Dieser ist frei drehbar auf einer die Werkstückspindel 2 umgebenden Hülse 23 gelagert, die ihrerseits am Maschinengestell 1 angeflanscht ist. Der mittlere Abschnitt 24 des Ringträgers 22 ist zu einer Riemenscheibe gestaltet. Um diesen Abschnitt 24 ist ein zu einer Riemenscheibe 25 eines Stellmotors 26 führender, verzahnter Flachriemen herumgelegt. Der Stellmotor 26 seinerseits ist in nicht veranschaulichter Weise ortsfest am Maschinengestell 1 gehaltert.

Auf der dem Sensorelement 21 gegenüberliegenden Seite formt der Ringträger 22 eine Signalscheibe 28, die ihrerseits mit einem an dem Flansch 23' der Hülse 23 befestigten Sensor 29 zusammenwirkt. Der drehfest angeordnete Sensor 29 bildet in Verbindung mit der zugehörigen Signalscheibe 28 einen dritten Drehgeber 30.

Das Erzeugen einer Schrägverzahnung 33 erfordert eine Drehverlagerung des Sensorelements 21. Dies geschieht mittels des Stellmotors 26, welcher den Ringträger 22 relativ zur Antriebswelle bzw. Werkstückspindel 2 verdreht. Die damit einhergehende Phasenverschiebung wird vom Drehgeber 19 als Abweichung vom Synchronlauf registriert und über eine Leitung 31 der Synchronsteuerungseinrichtung 17 mitgeteilt, welche über eine weitere Leitungsverbindung 32 mit dem Antrieb 9 in Verbindung steht. Es erfolgt nun eine Nachsynchronisierung entweder des Antriebsmotors 14 oder des Antriebsmotors 9 unter Erzielung eines phasenverschobenen Synchronlaufes von Werkstückantrieb 9 und Werkzeugantrieb 14. Der dritte Drehgeber 30 steht mit der nicht veranschaulichten CMC-Steuerung der Werkzeugmaschine in Verbindung. Die entsprechende Winkelstellung des Sensorelements 21 ist durch Vergleich der Ausgangsimpulse der Drehgeber 19 und 30 ermittelbar, welche Werte in die CNC-Steuerung einfließen.

Alle offenbarten Merkmale sind erfindungswesentlich.

## Patentansprüche

1. Werkzeugmaschine zur Bearbeitung umlaufender Werkstücke mittels eines synchron zum Werkstück (4) drehangetriebenen Werkzeugs (13), insbesondere Schlagmesser, zum Einbringen einer Verzahnung, wobei Werkstückantrieb (9) und Werkzeugantrieb (14) über jeweils zugeordnete Drehgeber (15,19) mittels elektronischer Steuermittel im Synchronlauf gehalten werden, mit einem einem der beiden Antriebe (9,14) zugeordneten Stellmotor (26) zur Beeinflussung der Phasenlage der beiden Antriebe (9,14), **dadurch gekennzeichnet, daß** ein Sensorelement (21) eines der beiden Drehgeber (15,19) drehverstellbar zum Stator (10) des zugehörigen Antriebsmotors (9) ist.

2. Werkzeugmaschine nach Anspruch 1 **gekennzeichnet durch** eine vom Antriebsmotor (9) getrennt auf der Antriebswelle einer Werkstückspindel (2) drehfest angeordnete Signalscheibe (20) und einen von der Antriebswelle frei drehbar durchgriffenen, vom Stellmotor (26) drehverlagerbaren Ringträger (22), welcher Träger des verstellbaren Sensorelementes (21) ist.

3. Werkzeugmaschine nach einem der vorhergehenden Ansprüche **dadurch gekennzeichnet, daß** der Ringträger (22) eine Signalscheibe (28) besitzt, welche von einem gehäusefesten Sensor (29) abgefragt ist.

## Claims

1. Machine tool for processing rotating workpieces by means of a tool (13), rotationally driven synchronously to the workpiece (4), in particular a fly cutter, for putting in a set of teeth, wherein workpiece drive (9) and tool drive (14) are held in synchronous running via allocated rotary encoders (15, 19) in each case by means of electronic control means, with a servomotor (26) allocated to one of the two drives (9, 14) for influencing the phase position of the two drives (9, 14), **characterised in that** a sensor element (21) of one the two rotary encoders (15, 19) can be rotationally adjusted with respect to the stator (10) of the associated drive motor (9).

2. Machine tool according to claim 1, **characterised by** a signal disc (20) arranged separately from the drive motor (9), as fixed against rotation, on the drive shaft of a workpiece spindle (2) and a ring carrier (22), penetrated as freely rotatable by the drive shaft and rotationally displaceable by the servomotor (26), which is the carrier of the adjustable sensor element (21).

3. Machine tool according to one of the preceding claims, **characterised in that** the ring carrier (22) has a signal disc (28) which is scanned by a sensor (29) fixed to the housing.

## Revendications

1. Machine-outil pour l'usinage de pièces tournantes au moyen d'un outil (13) entrainé en rotation en synchronisme avec la pièce (4) à usiner, l'outil étant en particulier un couteau à frapper, pour réaliser une denture, dans laquelle l'entraînement (9) de la pièce à usiner et l'entraînement (14) de l'outil sont maintenus en synchronisme à l'aide de moyens de commande électroniques par l'intermédiaire d'indicateurs de rotation (15,19) qui leur sont chacun associés, avec un moteur de positionnement (26) associé à l'un des deux entraînements (9,14) pour agir sur la position de phase des deux entraînements (9,14), **caractérisée en ce qu'**un élément capteur (21) est susceptible de déplacer en rotation l'un des deux indicateurs de rotation (15,19) par rapport au stator (10) du moteur d'entraînement correspondant (9).

2. Machine-outil selon la revendication 1, **caractérisée par** un disque de signalisation (20) séparé du moteur d'entraînement (9) et disposé solidairement en rotation sur l'arbre d'entraînement d'une broche (2) d'une pièce à usiner et par un support annulaire (22) supporté librement rotatif par l'arbre d'entraînement et susceptible d'être déplacé en rotation par le moteur de positionnement (26), lequel support annulaire constitue le support de l'élément capteur (21) réglable.

3. Machine-outil selon l'une des revendications précédentes, **caractérisée en ce que** le support annulaire (22) comporte un disque de signalisation (28) qui est interrogé par un capteur (29) solidaire du boîtier.
